# EUROPEAN PATENT SPECIFICATION

(11) **EP 1 147 652 B1**
(45) Date of publication and mention of the grant of the patent: **31.12.2008**
(21) Application number: 00902680.8
(22) Date of filing: 31.01.2000
(51) Int. Cl.: H04M 3/42, H04M 15/00

(54) **METHOD AND SYSTEM IN A TELECOMMUNICATION SYSTEM**
VERFAHREN UND SYSTEM IN EINEM TELEKOMMUNIKATIONSSYSTEM
PROCEDE ET SYSTEME DANS UN SYSTEME DE TELECOMMUNICATION

(30) Priority: 02.02.1999 FI 990193
(43) Date of publication of application: 24.10.2001
(73) Proprietor: TeliaSonera Finland Oyj, 00510 Helsinki (FI)
(72) Inventor: VIHINEN, Seppo, FIN-01260 Vantaa (FI)
(74) Representative: Simmelvuo, Markku Kalevi
(86) International application number: PCT/FI2000/000063
(87) International publication number: WO 2000/046975

(56) References cited:
- WO-A1-97/29584
- WO-A1-99/03252

## Description

The present invention relates to telecommunication systems. In particular, the invention relates to a new type of method and system that enable the volume of the information flow between telecommunication terminals to be increased.

### BACKGROUND OF THE INVENTION

In the public switched telephone network (PSTN), the dialing information was at first generated in the form of pulses. However, this manner of operation did not allow the transmission of call-specific supplementary information. The next step after pulse dialling is tone frequency dialling. As compared with pulse dialling, tone frequency dialling provides e.g. the advantage of faster dialling and a possibility to send supplementary information after the dialling. With mobile communication systems, e.g. the GSM system (GSM, Global System for Mobile communications), the reception of calls has become less dependent on location. Mobile communication systems have set the scene for the rise of a new form of communication, the short message service. In accordance with natural development, new systems bring about new services and solutions that improve customer satisfaction.

In the ISDN system (ISDN, Integrated Services Digital Network) and most of the mobile communication systems, it is possible to transmit information regarding the calling party, i.e. the A-number, along with the call-specific signalling. In practice, this appears in the receiving terminal as an identifier of the calling party. Further, after call setup it is possible to select various functions via tone frequency selections, based e.g. on a tone frequency menu. In this case, the telephone exchange communicates e.g. with an intelligent peripheral (IP) which is controlled by tone frequency signals received.

Transmitting supplementary information to the receiving party's terminal after call setup is slow as well as expensive if the receiving number is a specially priced service number. Using a data connection or a GSM text message, it is possible to communicate e.g. with an automated application. The problem is the slowness of call setup or variation in the transmission time of GSM text messages. However, the worst problem is that, due to limitations regarding the length of the number, the amount of information that can be transmitted in the B- or C-number is not sufficient for all automated applications.

The object of the present invention is to eliminate the drawbacks referred to above or at least to significantly alleviate them.

A specific object of the invention is to disclose a new type of method and system that will allow the transmission of a larger amount of information along with the call request especially considering various automated applications. In the method, the A-number field sent with the call request is used in a new way. It can be replaced with subscriber-specific information, or such information can be added to it. The invention makes it unnecessary e.g. to connect a speech channel for the transmission of information in conjunction with a call request, but the answering to the call is implemented as an acknowledgement sent to the A-party and the telephone exchange. In addition, the number data carried in the A-number field can be easily analyzed.

Publication WO99/03252 discloses a method and an arrangement for transmitting messages in analog circuits from an A-number terminal to a B-number terminal. According to said method a communication is established between the A-number terminal and an IN message service, and subsequently a signal is given from the A-number terminal to the IN message service indicating the desired message to be sent to the B-number terminal. The desired message is transmitted in a form of a code signal within an A-number field to the B-number terminal from the IN message service. The message is announced at the B-number terminal to the user thereof. The invention relates further to terminal means for receiving the messages.

As for the features characteristic of the present invention, reference is made to the claims.

### BRIEF DESCRIPTION OF THE INVENTION

The method of the invention concerns the transmission of subscriber-specific supplementary information in a telecommunication system. The telecommunication system preferably comprises a telecommunication network, a first and a second telecommunication terminal, a conversion/transmission center and an actuating device. The first and second telecommunication terminals are connected to the conversion/transmission center via the telecommunication network. The actuating device comprised in the system is connected to the second telecommunication terminal.

In the method, information is transmitted from the first telecommunication terminal to the second telecommunication terminal. To the receiver's normal identification number, i.e. the B-number, optional numbers are added. In the conversion/transmission center, the A-number field to be sent further is modified by appending to it the supplementary information that were appended to the normal B-number. The A-number field may also be modified by replacing it with completely new information, e.g. with the numbers appended to the B-number. Furthermore, it is possible to add to the A-number field or replace it with information depending on the geographic location of the first telecommunication terminal and/or on the time and/or other factors. The actuating device connected to the second telecommunication terminal is controlled on the basis of the information contained in the A-number field transmitted to the second telecommunication terminal. A confirmation of execution of a control request can be sent to the first telecommunication terminal. In this way, it is possible to verify whether the desired control function has been successfully executed or not.

The system of the invention comprises means for modifying the A-number field to be transmitted from the conversion/transmission center to the second telecommunication terminal by adding control information to it, and means for controlling the actuating device with the information in the A-number field.

The system of the invention further comprises means for adding information dependent on the geographic location of the first telecommunication terminal and/or on the time and/or other factors to the A-number field to be transmitted. Moreover, the conversion/transmission center comprised in the system may be a telephone exchange, a message center or a VRU (VRU, Voice Response Unit), e.g. an IBM Direct Talk. Further, the first and second telecommunication terminals may be mobile stations. The first telecommunication terminal may also be a telephone apparatus in the public switched telephone network.

As compared with prior art, the present invention provides the advantage of increasing the amount of information transmitted together with call requests. A further advantage of the invention is that no speech channel need be connected for the transmission of the information. Yet another advantage is that the information carried in the A-number field can be analyzed by simple methods and means.

### LIST OF ILLUSTRATIONS

In the following, the invention will be described in detail by the aid of some of its embodiments, wherein
Fig. 1 presents a preferred system according to the present invention, and
Fig. 2 presents an application example illustrating the operation of the system presented in Fig. 1.

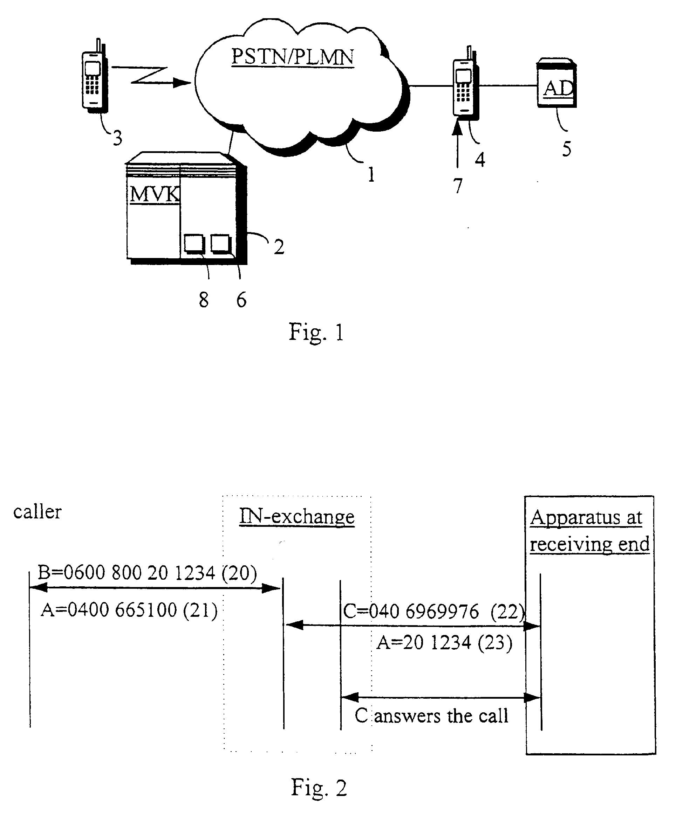

The system presented in Fig. 1 comprises a telecommunication network 1 and a conversion/transmission center 2 connected to the telecommunication network 1. The telecommunication network 1 is e.g. a PSTN (Public Switched Telecommunications Network) or a PLMN (Public Land Mobile Network). The system further comprises a first telecommunication terminal 3 and a second telecommunication terminal 4, which are connected via the telecommunication network 1 to the conversion/transmission center 2. Moreover, the system comprises an actuating device 5 connected to the second telecommunication terminal 4.

The system comprises means 6 for modifying the A-number field to be sent from the conversion/transmission center 2 to the second telecommunication terminal 4 by adding control information to it. Further, the system comprises means 7 for controlling the actuating device 5 on the basis of the information contained in the A-number field. In addition, the system comprises means 8 for adding information dependent on the geographic location of the first telecommunication terminal 3 and/or on the time and/or other factors to the A-number field to be transmitted.

Means 6 - 8 are implemented in a manner known in itself and they will therefore not be described in detail.

Fig. 2 presents an application example of the operation of the system illustrated in Fig. 1. In the example, a caller wants to control a jukebox and calls the number 0600-800-20-1234, step 20. In the A-number field in the call setup, the number 0400-665100 is transmitted, step 21. The exchange in the network, in this example an IN-network (IN, Intelligent Network), changes the number data in the A-number field into 20 1234, step 23. At step 22, a number conversion is performed whereby the initially selected service number is set as the final number, i.e. C-number. In this example, the extra numbers, 20 1234, appended to the telephone number dialed at the beginning mean that the caller supplies a monetary input of 20 marks into the jukebox by telephone and wants to have piece number 1234 played. The apparatus at the receiving end may be a telephone component in the automaton, which receives the incoming information and controls the automaton in accordance with the information contained in the A-number field. In this example, the service selected by the caller is charged for in the telephone bill. The apparatus at the receiving end may alternatively be a number display device or a computer provided with the required software.

In an embodiment of the system according to Fig. 1, the A-party (0400-665100) calls the number of an automatic snack machine (0600-88550-XX) and wants to pay 18 marks by this phone call. According to the invention, the A-party dials the number 0600-88550-18. The number is converted in the conversion/transmission center, e.g. in the telephone exchange, into the actual C-number of the automaton, which in this example is 040E-123465. The exchange announces the A-party identification as the number 0400-665100-18. The automaton knows that the two last digits of the A-number represent the amount to be paid for the purchase as specified by the A-party. After the automaton has deciphered the A-number, its display will present a message, e.g. "Paid FIM 18". This indicates that the caller may select products for the sum of FIM 18 from the machine.

The invention is not restricted to the examples of its embodiments described above, but many variations are possible within the scope of the inventive idea defined in the claims.

## Claims

1. Method for transmitting subscriber-specific information in a telecommunication system comprising a telecommunication network (1), a conversion/transmission center (2) connected to the telecommunication network (1), a first telecommunication terminal (3) connected to the conversion/transmission center (2) via the telecommunication network (1), a second telecommunication terminal (4) connected to the conversion/transmission center (2) via the telecommunication network (1), an actuating device (5) connected to the second telecommunication terminal (4),
in which method connection-specific information is transmitted from the first telecommunication terminal (3) to the second telecommunication terminal (4) and subscriber-specific optional parameters are added to the dialling sent to the conversion/transmission center (2),
**characterized in that** the method comprises the steps of:
modifying the A-number field to be transmitted from the conversion/transmission center (2) to the second telecommunication terminal (4) by adding the subscriber-specific information to it and/or replacing the A-number field with the subscriber-specific information; and
controlling the actuating device (5) on the basis of the information contained in the A-number field.

2. Method as defined in claim 1, **characterized in that**, in the conversion/transmission center (2), information dependent on the geographic location of the first telecommunication terminal (3) and/or on the time and/or other factors is added to the A-number field to be transmitted.

3. Method as defined in claims 1 and 2, **characterized in that** the subscriber-specific information placed in the A-number field is transmitted in conjunction with the call request.

4. Method as defined in claims 1 - 3, **characterized in that** a confirmation of execution of the control request is sent to the first telecommunication terminal (3).

5. Method as defined in claims 1 - 4, **characterized in that** a confirmation of execution of the control request is sent to the first telecommunication terminal (3) by answering the call.

6. System for transmitting subscriber-specific information in a telecommunication system comprising a telecommunication network (1), a conversion/transmission center (2) connected to the telecommunication network (1), a first telecommunication terminal (3) connected to the conversion/transmission center (2) via the telecommunication network (1), a second telecommunication terminal (4) connected to the conversion/transmission center (2) via the telecommunication network (1), an actuating device (5) connected to the second telecommunication terminal (4),
in which system connection-specific information is transmitted from the first telecommunication terminal (3) to the second telecommunication terminal (4) and subscriber-specific optional parameters are added to the dialling sent to the conversion/transmission center (2), **characterized in that** the system comprises:
means (6) for modifying the A-number field to be transmitted from the conversion/transmission center (2) to the second telecommunication terminal (4) by adding the subscriber-specific information to it; and
means (7) for controlling the actuating device (5) on the basis of the information contained in the A-number field.

7. System as defined in claim 6, **characterized in that** the system comprises means (8) for adding information dependent on the geographic location of the first telecommunication terminal (3) and/or on the time and/or other factors to the A-number field to be transmitted.

8. System as defined in claims 6 and 7, **characterized in that** the conversion/transmission center (2) is a telephone exchange.

9. System as defined in claims 6 - 8, **characterized in that** the conversion/transmission center (2) is a message center.

10. System as defined in claims 6 - 9, **characterized in that** the conversion/transmission center (2) is a VRU.

11. System as defined in claims 6 - 10, **characterized in that** the first telecommunication terminal (3) is a mobile station.

12. System as defined in claims 6 - 11, **characterized in that** the second telecommunication terminal (4) is a mobile station.

13. System as defined in claims 6 - 12, **characterized in that** the first telecommunication terminal (3) is a telephone apparatus in the public switched telephone network.

14. System as defined in claims 6 - 13, **characterized in that** the second telecommunication terminal (4) is a number display device or equivalent.

## Patentansprüche

1. Verfahren zum Senden von teilnehmerspezifischer Information in einem Telekommunikationssystem, welches aufweist:
ein Telekommunikationsnetz (1), ein Konversions- bzw. Umwandlungs-/Sendezentrum (2), welches an das Telekommunikationsnetz (1) angeschlossen ist, ein erstes Telekommunikationsendgerät (3), welches an das Konversions-/Sendezentrum (2) über das Telekommunikationsnetz (1) angeschlossen ist, ein zweites Telekommunikationsendgerät (4), welches an das Konversions-/Sendezentrum (2) über das Telekommunikationsnetz (1) angeschlossen ist, eine Stelleinrichtung (5), welche an dem zweiten Telekommunikationsendgerät (4) angeschlossen ist,
wobei in dem Verfahren anschlussspezifische Information von dem ersten Telekommunikationsendgerät (3) an das zweite Telekommunikationsendgerät (4) gesendet wird und teilnehmerspezifische, optionale Parameter an den Wählvorgang hinzugefügt werden, welche an das Konversions-/Sendezentrum (2) gesendet werden,
**dadurch gekennzeichnet, dass** das Verfahren die folgenden Schritte aufweist:
Modifizieren des A-Zahlen- bzw. Nummernfeldes, welches von dem Konversions-/Sendezentrum (2) an das zweite Telekommunikationsendgerät (4) durch Hinzufügen der teilnehmerspezifischen Information an dieses zu senden ist, und/oder Ersetzen des A-Zahlenfeldes durch die teilnehmerspezifische Information; und
Steuern der Stelleinrichtung (5) auf der Grundlage der Information, welche in dem A-Nummernfeld enthalten ist.

2. Verfahren nach Anspruch 1, **dadurch gekennzeichnet, dass** in dem Konversions-/Sendezentrum (2) Information, welche von der geographischen Lage des ersten Telekommunikationsendgerätes (3) und/oder von der Zeit und/oder anderen Faktoren abhängig ist bzw. sind, an das A-Nummernfeld hinzugefügt wird, welche zu senden ist.

3. Verfahren nach Anspruch 1 und 2, **dadurch gekennzeichnet, dass** die teilnehmerspezifische Information, welche in dem A-Nummernfeld platziert ist, zusammen mit der Anrufanforderung gesendet wird.

4. Verfahren nach Anspruch 1-3, **dadurch gekennzeichnet, dass** eine Bestätigung der Ausführung der Steueranforderung an das erste Telekommunikationsendgerät (3) gesendet wird.

5. Verfahren nach Anspruch 1-4, **dadurch gekennzeichnet, dass** eine Bestätigung des Ausführens der Steueranforderung an das erste Telekommunikationsendgerät (3) durch Beantworten des Anrufes gesendet wird.

6. System zum Senden von teilnehmerspezifischer Information in einem Telekommunikationssystem, welches aufweist: ein Telekommunikationsnetz (1), ein Konversions-/Sendezentrum (2), welches an das Telekommunikationsnetz (1) angeschlossen ist, ein erstes Telekommunikationsendgerät (3), welches an das Konversions-/Sendezentrum (2) über das Telekommunikationsnetz (1) angeschlossen ist, ein zweites Telekommunikationsendgerät (4), welches an das Konversions-/Sendezentrum (2) über das Telekommunikationsnetz (1) angeschlossen ist, eine Stelleinrichtung (5), welche an das zweite Telekommunikationsendgerät (4) angeschlossen ist, wobei in dem System anschluss- bzw. verbindungsspezifische Information von dem ersten Telekommunikationsendgerät (3) an das zweite Telekommunikationsendgerät (4) gesendet wird und teilnehmerspezifische, optionale Parameter dem Wählvorgang hinzugefügt werden, welche zu dem Konversions-/Sendezentrum (2) gesendet werden, **dadurch gekennzeichnet, dass** das System aufweist:
eine Einrichtung (6), um das A-Nummernfeld zu modifizieren, welches von dem Konversions-/Sendezentrum (2) an das zweite Telekommunikationsendgerät (4) durch Hinzufügen der teilnehmerspezifischen Information an dieses zu senden ist; und
eine Einrichtung (7), um die Stelleinrichtung (5) auf der Grundlage der Information zu steuern, welche in dem A-Nummernfeld enthalten ist.

7. System nach Anspruch 6, **dadurch gekennzeichnet, dass** das System eine Einrichtung (8) aufweist, um Information abhängig von dem geographischen Ort des ersten Telekommunikationsendgerätes (3) und/oder von der Zeit und/oder anderen Faktoren dem A-Nummernfeld hinzuzufügen, welche zu senden ist.

8. System nach den Ansprüchen 6 und 7, **dadurch gekennzeichnet, dass** das Konversions-/Sendezentrum (2) ein Ortsanschlussbereich ist.

9. System nach den Ansprüchen 6-8, **dadurch gekennzeichnet, dass** das Konversions-/Sendezentrum (2) ein Mittei lungs-/Nachrichtenzentrum ist.

10. System nach den Ansprüchen 6-9, **dadurch gekennzeichnet, dass** das Konversions-/Sendezentrum (2) ein VRU ist.

11. System nach den Ansprüchen 6-10, **dadurch gekennzeichnet, dass** das erste Telekommunikationsendgerät (3) ein Mobiltelefon ist.

12. System nach den Ansprüchen 6-11, **dadurch gekennzeichnet, dass** das zweite Telekommunikationsendgerät (4) ein Mobiltelefon ist.

13. System nach den Ansprüchen 6-12, **dadurch gekennzeichnet, dass** das erste Telekommunikationsendgerät (3) ein Telefonapparat in dem öffentlichen Fernsprechwählnetz ist.

14. System nach den Ansprüchen 6-13, **dadurch gekennzeichnet, dass** das zweite Telekommunikationsendgerät (4) eine Zahlen- bzw. Nummern-Anzeigeeinrichtung oder ein Äquivalent dazu ist.

## Revendications

1. Procédé pour transmettre des informations spécifiques à un abonné dans un système de télécommunication comportant un réseau de télécommunication (1), un centre de conversion / transmission (2) connecté au réseau de télécommunication (1), un premier terminal de télécommunication (3) connecté au centre de conversion / transmission (2) via le réseau de télécommunication (1), un second terminal de télécommunication (4) connecté au centre de conversion / transmission (2) via le réseau de télécommunication (1), un dispositif d'actionnement (5) connecté au second terminal de télécommunication (4),
dans lequel procédé des informations spécifiques à une connexion sont transmises du premier terminal de télécommunication (3) au second terminal de télécommunication (4) et des paramètres facultatifs spécifiques à un abonné sont ajoutés à la composition d'appel envoyée au centre de conversion / transmission (2),
**caractérisé en ce que** le procédé comporte les étapes ci-dessous consistant à :
modifier le champ numérique A devant être transmis du centre de conversion / transmission (2) au second terminal de télécommunication (4), en ajoutant à ce champ les informations spécifiques à un abonné et/ou en remplaçant le champ numérique A par les informations spécifiques à un abonné ; et
commander le dispositif d'actionnement (5) sur la base des informations contenues dans le champ numérique A.

2. Procédé selon la revendication 1, **caractérisé en ce que**, dans le centre de conversion / transmission (2), des informations dépendantes de la situation géographique du premier terminal de télécommunication (3) et/ ou dépendantes de l'instant et/ou d'autres facteurs, sont ajoutées au champ numérique A à transmettre.

3. Procédé selon l'une quelconque des revendications 1 et 2, **caractérisé en ce que** les informations spécifiques à un abonné placées dans le champ numérique A sont transmises conjointement avec la demande d'appel.

4. Procédé selon l'une quelconque des revendications 1 à 3, **caractérisé en ce qu'**une confirmation de mise en oeuvre de la demande de commande est envoyée au premier terminal de télécommunication (3).

5. Procédé selon l'une quelconque des revendications 1 à 4, **caractérisé en ce qu'**une confirmation de mise en oeuvre de la demande de commande est envoyée au premier terminal de télécommunication (3) en répondant à l'appel.

6. Système pour transmettre des informations spécifiques à un abonné dans un système de télécommunication comportant un réseau de télécommunication (1), un centre de conversion / transmission (2) connecté au réseau de télécommunication (1), un premier terminal de télécommunication (3) connecté au centre de conversion / transmission (2) via le réseau de télécommunications (1), un second terminal de télécommunication (4) connecté au centre de conversion / transmission (2) via le réseau de télécommunication (1), un dispositif d'actionnement (5) connecté au second terminal de télécommunication (4),
dans lequel système, des informations spécifiques à une connexion sont transmises du premier terminal de télécommunication (3) au second terminal de télécommunication (4) et des paramètres facultatifs spécifiques à un abonné sont ajoutés à la composition d'appel envoyée au centre de conversion / transmission (2),
**caractérisé en ce que** le système comporte :
un moyen (6) pour modifier le champ numérique A devant être transmis du centre de conversion / transmission (2) au second terminal de télécommunication (4) en ajoutant, à ce champ, les informations spécifiques à un abonné ; et
un moyen (7) pour commander le dispositif d'actionnement (5) sur la base des informations contenues dans le champ numérique A.

7. Système selon la revendication 6, **caractérisé en ce que** le système comporte un moyen (8) pour ajouter des informations dépendantes de la situation géographique du premier terminal de télécommunication (3) et/ ou dépendantes de l'instant et/ou d'autres facteurs au champ numérique A devant être transmis.

8. Système selon l'une quelconque des revendications 6 et 7, **caractérisé en ce que** le centre de conversion / transmission (2) est un central téléphonique.

9. Système selon l'une quelconque des revendications 6 à 8, **caractérisé en ce que** le centre de conversion / transmission (2) est un centre de messages.

10. Système selon l'une quelconque des revendications 6 à 9, **caractérisé en ce que** le centre de conversion / transmission (2) est un système de réponse vocale interactif (VRU).

11. Système selon l'une quelconque des revendications 6 à 10, **caractérisé en ce que** le premier terminal de télécommunication (3) est une station mobile.

12. Système selon l'une quelconque des revendications 6 à 11, **caractérisé en ce que** le second terminal de télécommunication (4) est une station mobile.

13. Système selon l'une quelconque des revendications 6 à 12, **caractérisé en ce que** le premier terminal de télécommunication (3) est un appareil téléphonique dans le réseau téléphonique public commuté.

14. Système selon l'une quelconque des revendications 6 à 13, **caractérisé en ce que** le second terminal de télécommunication (4) est un dispositif d'affichage de numéro ou un dispositif similaire.
